# EUROPEAN PATENT SPECIFICATION

(11) **EP 2 507 539 B1**
(45) Date of publication and mention of the grant of the patent: **21.02.2018**
(21) Application number: 09802229.6
(22) Date of filing: 04.12.2009
(51) Int. Cl.: F16L 11/08

(54) **MULTI -LAYER TUBE, IN PARTICULAR FOR HYDRAULIC POWER STEERING PLANTS**
MEHRSCHICHTIGES ROHR, IM BESONDEREN FÜR HYDRAULISCHE SERVOLENKANLAGEN
TUBE MULTICOUCHE, EN PARTICULIER POUR INSTALLATIONS DE DIRECTION ASSISTÉE HYDRAULIQUE

(43) Date of publication of application: 10.10.2012
(73) Proprietor: Errecinque S.r.l., 10040 Leini (IT)
(72) Inventor: CARRARO, Massimo, I-10040 Leini (TO) (IT)
(74) Representative: Garavelli, Paolo
(86) International application number: PCT/IT2009/000549
(87) International publication number: WO 2011/067799

(56) References cited:
- EP-A1- 0 267 818
- EP-A1- 0 740 098
- WO-A1-98/37303
- FR-A1- 2 801 960
- GB-A- 1 245 198
- US-A1- 2009 211 660

## Description

The present invention refers to a multi-layer tube, in particular for transporting oil in hydraulic power steering plants of motor vehicles.

As known, hydraulic power steering plants for motor vehicles, and in particular for heavy trucks, comprise at least one pump joined to steering members by means of tubes aimed for transporting pressurised oil. Generally, due to such high pressures to which they are subjected when operating, such tubes are commonly made of a metallic material, such as for example steel or a metallic braid, or of rubber with internal metallic inserts. Such tubes are however relatively costly and, given their high stiffness, they can adapted with difficulty to the different path lay-outs imposed by the different arrangements of components on the various vehicles.

Moreover, such existing metallic pipes are extremely noisy due to their possible rubbing against various parts of the vehicle and vibrations generated by the engine

Moreover, the assembling operation of such metallic tubes inside the vehicle requires the use of numerous supports and brackets, resulting particularly difficult.

Moreover, obviously, such existing metallic tubes for transporting oil are relatively heavy, negatively affecting the global vehicle weight.

The art also proposes multi-layer tubes as disclosed in EP2094481, FR2921860, FR2909433, US2007036925, DE19814924, GB1245198. Such pipes, however, are not suitable for applications in the automotive sector, since they do not guarantee the necessary requirements of seal, resistance and reliability.

The document EP 0267818 discloses another known multi-layer tube. Therefore, object of the present invention is solving the above prior art problems, by providing a multi-layer tube, in particular for transporting oil in hydraulic power steering plants of motor vehicles, that is less expensive than traditional metallic tubes or rubber tubes with internal metallic inserts, even if it keeps similar features in terms of resistance.

Another object of the present invention is providing a multi-layer tube, in particular for transporting oil in hydraulic power steering plants of motor vehicles, that is lighter than traditional metallic tubes or rubber tubes with internal metallic inserts, even if it keeps similar features in terms of resistance.

Moreover, an object of the present invention is providing a multi-layer tube, in particular for transporting oil in hydraulic power steering plants of motor vehicles, that can be easily bent through thermoforming in order to be adapted to any lay-out of an engine compartment.

Another object of the present invention is providing a multi-layer tube, in particular for transporting oil in hydraulic power steering plants of motor vehicles, that removes noises of metallic tubes or in the metallic braid of the prior art.

The above and other objects and advantages of the invention, as will appear from the following description, are obtained with a multi-layer tube, in particular for transporting oil in hydraulic power steering plants of motor vehicles as claimed in claim 1.

It will be immediately obvious that numerous variations and modifications (for example related to shape, sizes, arrangements and parts with equivalent functionality) can be made to what is described, without departing from the scope of the invention as appears from the enclosed claim.

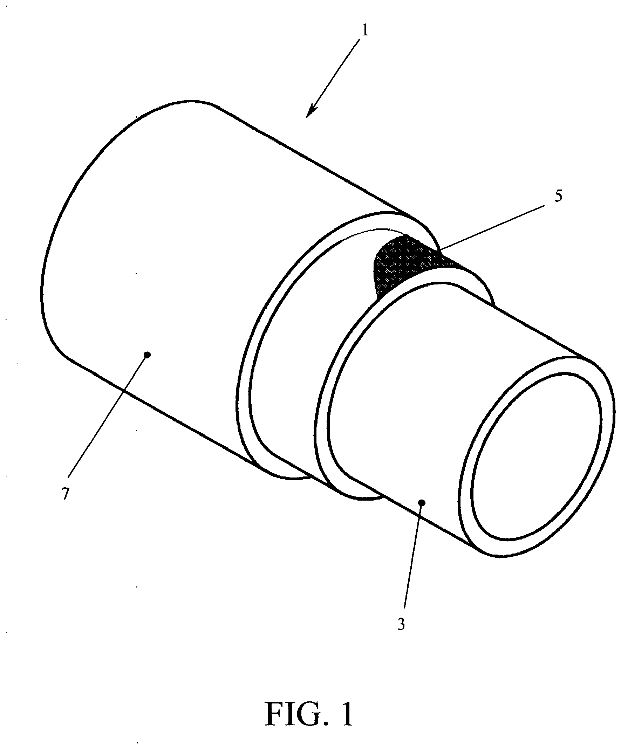

The present invention will be better described by some preferred embodiments thereof, provided as a nonlimiting example, with reference to the single enclosed drawing, in which Figure 1 shows a perspective, partially sectioned view of a preferred embodiment of the multi-layer tube according to the present invention.

With reference then to Figure 1, it is possible to note that the multi-layer tube 1 according to the present invention, in particular adapted for transporting oil in hydraulic power steering plants of motor vehicles, is composed, radially starting from inside towards outside the tube, of:
- an internal tubular structure 3 made of a thermoplastic material;
- at least one reinforcing layer 5 made of a textile material; and
- at least one external coating layer 7 made of a thermoplastic material. The internal tubular structure 3 represent the most internal layer of the tube 1 according to the present invention aimed to directly get in contact with the transported oil: for such reason, obviously, the structure 3 must be completely impermeable to oil. The thermoplastic material of which such internal tubular structure 3 is made is a polyester. Preferably, such internal tubular structure 3 has an external diameter substantially equal to 13 mm and an internal diameter substantially equal to 10 mm.

The reinforcing layer 5 is instead adapted to guarantee a high resistance to oil transport pressures: then the textile material of which such reinforcing layer 5 is made is a braid-shaped woven material, such braid-shaped woven material being composed of aramide fibres. The braid-shaped woven material made of aramide fibres is composed of at least 3 Kevlar® wires with 16 spindles. Kevlar is a trade mark of the Dupont Company. The external coating layer 7 instead represents the layer of protection from the external environment of the internal layers 3 and 5 of the tube 1 according to the present invention. The thermoplastic material of which such internal tubular structure 3 is made is a polyester. The external coating layer 7 has a thickness substantially equal to 0.8 mm and a diameter substantially equal to 17 mm.

The present invention, as previously described, therefore allows obtaining a multi-layer tube 1 having advantageously an average specific weight of 165 g/m.

The following Table 1 includes, as an example, the results of some comparative tests performed by the Applicant between a prior art tube and a multi-layer tube 1 according to the present invention under different operating conditions, from which it is possible to clearly see the increase of performances obtained by the multi-layer tube 1:

**Table 1**

| **TEST TYPE** | **RESULTS** | |
|---|---|---|
| | **PRIOR ART TUBE** | **MULTI-LAYER TUBE 1** |
| 200 bar | 200 bar | 200 bar |
| 600 bar | 630 bar | 630 bar |
| 320 bar with operating oil | 620 bar | - 560 Bar with DEXRON II oil |
| | | - 386 bar with synthetic oil |
| Traction | Withdrawal at 375-385 bar | Withdrawal at 509 bar |
| 500,000 cycles at 80°C frequency 2 sec. | Test not passed | Test passed |
| 800 N | > 1000 N | > 800 N |
| 600 N | 600-700 N | > 600 N |
| 2h a -35°C: creaks not allowed | negative | Positive 2 h at-40 °C |

Moreover, the present invention, as previously described, allows obtaining a multi-layer tube 1 that can be easily bent through thermoforming in order to be adapted to any layout of an engine compartment.

## Claims

1. Multi-layer tube (1), adapted for transporting oil in hydraulic power steering plants of motor vehicles, said multi-layer tube (1) being composed of:
- one internal tubular structure (3) made of a thermoplastic material, wherein said thermoplastic material of said internal tubular structure (3) is polyester, said internal tubular structure (3) having an external diameter substantially equal to 13 mm and an internal diameter substantially equal to 10 mm;
- one reinforcing layer (5) made of a textile material, said textile material of said reinforcing layer (5) being a braid-shaped woven material composed of aramide fibres being composed of at least 3 Kevlar® wires with 16 spindles ; and
- one external coating layer (7) made of a thermoplastic material, wherein said thermoplastic material of said external coating layer (7) is polyester, said external coating layer (7) having a thickness substantially equal to 0.8 mm and a diameter substantially equal to 17 mm.

## Patentansprüche

1. Mehrschichtiges Rohr (1), das für den Transport von Öl in Anlagen mit hydrostatischer Lenkung von Fahrzeugen bestimmt ist, das genannte mehrschichtige Rohr (1) besteht aus:
- einer rohrförmigen Innenstruktur (3) aus einem thermoplastischen Material, in der das genannte thermoplastische Material der genannten rohrförmigen Innenstruktur (3) Polyester ist, die genannte rohrförmige Innenstruktur (3) hat einen Außendurchmesser, der im Wesentlichen 13 mm entspricht, und einen Innendurchmesser, der im Wesentlichen 10 mm entspricht;
- einer Verstärkungsschicht (5) aus Textilmaterial, das genannte Textilmaterial der genannten Verstärkungsschicht (5) ist ein Garn in Zopfform, das aus Aramidfasern besteht, welcher aus mindestens 3 Kevlar®-Fäden mit 16 Spindeln besteht; und
- einer Außenbeschichtung (7) aus einem thermoplastischen Material, in der das genannte thermoplastische Material der genannten Außenbeschichtung (7) Polyester ist, die genannte Außenbeschichtung (7) hat einen Außendurchmesser, der im Wesentlichen 0,8 mm entspricht, und einen Innendurchmesser, der im Wesentlichen 17 mm entspricht.

## Revendications

1. Tube multicouche (1) destiné au transport d'huile dans des systèmes de direction assistée hydraulique qui est composé de :
- une structure tubulaire interne (3) en matière thermoplastique, dont la matière thermoplastique de cette structure tubulaire interne (3) est du polyester, et où la structure tubulaire interne (3) possède un diamètre externe substantiel de 13 mm et un diamètre interne substantiel de 10 mm ;
- une couche de renfort (5) en matière textile, dont la matière textile de cette couche de renfort (5) est du fil tressé constitué de fibres aramides composé au moins de 3 fils de Kevlar® à 16 noyaux ; et
- une couche externe de revêtement (7) en matière thermoplastique, dont la matière thermoplastique de cette couche externe de revêtement (7) est du polyester, et où cette couche externe de revêtement (7) possède une épaisseur substantielle de 0,8 mm et un diamètre substantiel de 17 mm.
